# EUROPEAN PATENT APPLICATION

(11) **EP 2 061 112 A1**
(43) Date of publication of application: **20.05.2009**
(21) Application number: 08168238.7
(22) Date of filing: 04.11.2008
(51) Int. Cl.: H01M 8/04, H01M 8/24

(54) **Fuel cell stack**

(30) Priority: 14.11.2007 KR 20070116305
(71) Applicant: Samsung SDI Co., Ltd., Suwon-si Gyeonggi-do (KR)
(72) Inventor: An, Seong-Jin, Gyeonggi-do (KR); Lee, Dong-Uk, Gyeonggi-do (KR); Lee, Mee-Young, Gyeonggi-do (KR); Shin, Seung-Shik, Gyeonggi-do (KR); Lee, Chi-Seung, Gyeonggi-do (KR); Song, Min-Kyu, Gyeonggi-do (KR)
(74) Representative: Hengelhaupt, Jürgen

(57) **Abstract**

The present invention relates to an U-type fuel cell stack comprising a stack comprising a plurality of fuel cells disposed in a stack body; a fuel manifold in the stack body fluidly connected to the plurality of fuel cells and configured for supplying fuel to the plurality of fuel cells and disposal of unreacted fuel and byproducts from the plurality of fuel cells; and an oxidant manifold in the stack body fluidly connected to the plurality of fuel cells and configured for supplying oxidant to the plurality of fuel cells and disposal of unreacted oxidant and byproducts from the plurality of fuel cells. The fuel cell stack is characterized in that at least one baffle is disposed in the fuel manifold and/or in the oxidant manifold. The baffle comprises a recess extending in a longitudinal direction of the baffle and having a cross-sectional area which decreases in the longitudinal direction.

## Description

### BACKGROUND

### Field

The present disclosure relates to a fuel cell, and more particularly to a fuel cell stack capable of making fuel flow within the stack uniform.

### Discussion of Related Art

A fuel cell is a power generation system generating electric energy by electrochemically reacting hydrogen and oxygen contained in hydrocarbon based materials such as methanol, ethanol, and natural gas. According to sorts of electrolyte used, fuel cells can be sorted as a phosphoric acid fuel cell, a molten carbonate fuel cell, a solid oxide fuel cell, a polymer electrolyte fuel cell, and an alkaline fuel cell, etc. These fuel cells are basically operated based on the same principle, but are different in regard to sorts of fuels used, operating temperatures, sorts of catalysts used, and sorts of electrolytes used, etc.

A polymer electrolyte membrane fuel cell (PEMFC) has a very high output characteristic, a low operating temperature, a prompt starting and a response characteristic as compared to other kinds of fuel cells. Therefore, the PEMFC has advantages in that it can be widely applied to power sources such as a power source for a portable electronic equipment, a power source for automobile, or a stationary power plant used in a house and a public building, etc. A direct methanol fuel cell (DMFC) directly supplying liquid-phase fuel to a stack does not use a reformer for obtaining hydrogen from fuel, as in the case of the polymer electrolyte membrane fuel cell, so it may be more advantageous in miniaturization.

The polymer electrolyte membrane fuel cell and the direct methanol fuel cell comprise a stack, a fuel tank, and a fuel tank, etc., by way of example. The stack commonly has a structure where unit fuel cells (hereinafter, referred to as cells) formed of a membrane electrode assembly (MEA) and a separator are stacked in several to several tens. In this case, the inside of the fuel cell stack is commonly comprises a manifold for supplying fuel to the respective cells and a manifold for supplying an oxidant. By controlling the stacked number of the cells, a desired voltage can be easily obtained in the fuel cell in a stack structure.

The fuel cell stack may be divided into a Z-type stack and a U-type stack according to the disposition of a fuel inlet, a fuel outlet, an oxidant inlet, and an oxidant outlet. For example, the Z-type stack represents a structure where the fuel inlet and the fuel outlet are located on the surfaces opposed to each other. And the oxidant inlet and the oxidant outlet are located on the surfaces opposed to each other in a similar manner. The U-type stack represents a structure where the fuel inlet and the fuel outlet are located on the same surface, and the oxidant inlet and the oxidant outlet are located on the same surface, in a similar manner. In case of the U-type stack, the fuel inlet and the oxidant inlet may be located together on the same surface or may be located on the surfaces opposed to each other or on different surfaces.

Although the Z-type stack is more advantageous than the U-type stack in view of uniformity of fuel supplied to the respective cells, it has disadvantage in that the fuel inlet and the fuel outlet are located on the sides opposed to each other and volume of the stack increases. On the contrary, the U-type stack where the fuel inlet and the fuel outlet are located on one side has an advantage in that the volume of the stack is smaller as compared to the Z-type stack.

However, in case of the U-type stack, fuel is supplied within a first fuel manifold through the fuel inlet of the stack and is then divided into the respective cells to be flowed in. Thereafter, unreacted fuel and byproducts are collectively discharged from the respective cells to the inside of a second fuel manifold to be flowed out to the outside of the stack through the fuel outlet. At this time, the fuel inlet and the fuel outlet are located on the same surface so that the fuel flows differ for each cell. In other words, the length of the fuel flow path to the cell located proximal to the fuel inlet differs from that of the fuel flow path to the cell located distal from the fuel inlet. The difference of the lengths of the fuel flow paths causes a pressure difference between the respective cells, consequently making the amount of fuel supplied to the respective cells different.

When the aforementioned phenomenon occurs, electricity generation becomes unstable in the cell of which fuel pressure is low. The deviation in the electricity generation between the cells causes a problem that the overall performance of the stack is unstable.

### SUMMARY OF THE INVENTION

It is an object of the present disclosure to provide a fuel cell stack capable of improving supply uniformity of fuel and/or an oxidant supplied to the cells within the stack, while minimizing the volume of the stack occupied in a system.

Some embodiments of the disclosure comprise a fuel cell stack structure configured to deliver fuel to each of the fuel cells in an U-type stack. The fuel cell stack structure comprises manifolds configured to supply fuel and oxidants to fuel cells in the stack and baffle (channel) inserted into each of the manifolds. There may exists a cross-section transition point of the baffle located between adjacent portions of the baffle, e.g. at about the one sixth of the total length of the baffle to divide the baffle into two portions. The cross-sections of the first portion and the second portion of the baffle change differently.

According to the present invention there is provided an U-type fuel cell stack comprising a stack comprising a plurality of fuel cells disposed in a stack body; a fuel manifold in the stack body fluidly connected to the plurality of fuel cells and configured for supplying fuel to the plurality of fuel cells and disposal of unreacted fuel and byproducts from the plurality of fuel cells; and an oxidant manifold in the stack body fluidly connected to the plurality of fuel cells and configured for supplying oxidant to the plurality of fuel cells and disposal of unreacted oxidant and byproducts from the plurality of fuel cells. The fuel cell stack is characterized in that at least one baffle is disposed in the fuel manifold and/or in the oxidant manifold. The baffle comprises a recess extending in a longitudinal direction of the baffle and having a cross-sectional area which decreases in the longitudinal direction.

Preferablly, the recess is subdivided into a plurality of recess portions and each recess portion has a constant cross-sectional area or constant decrease of the cross-sectional area over its length. The longitudinal recess may comprise a first recess portion proximal to an inlet of the fuel manifold and a second recess portion disposed adjacent to the first recess portion, wherein a decrease of the cross-sectional area in the first recess portion is larger than a decrease of the cross-sectional area in the second recess portion. The cross-sectional area of the first recess portion may decrease from 90% to 70% of an area of the fuel manifold and the cross-sectional area of the second recess portion may decrease from 70% to 50% of an area of fuel manifold. A ratio between a length of the first recess portion and a length of second recess portion may be about 1:5.

Preferably, the baffle consists of a non-electrically conductive material and acid resistant material. Inparticular, the baffle may consist of acrylonitrile-butadiene-styrene (ABS), polytetrafluoroethylene (PEFE) or polyethylene (PE).

The fuel manifold may further comprise a first fuel manifold portion configured for supplying fuel; a second fuel manifold portion configured for discharging unreacted fuel and byproducts discharged from the cells; a first baffle disposed in the first fuel manifold portion; and a second baffle disposed in the second fuel manifold portion.

The oxidant manifold may further comprise a first oxidant manifold portion configured for supplying oxidant; a second oxidant manifold portion configured for discharging unreacted oxidant and byproducts discharged from the cells; a third baffle disposed in the first oxidant manifold portion; and a fourth baffle disposed in the second oxidant manifold portion.

The fuel cell stack is preferably configured to use fuel comprising any one of gas-phase fuel, liquid-phase fuel, and the combination thereof. The fuel may be one of hydrogen gas, methanol, and ethanol.

### BRIEF DESCRIPTION OF THE DRAWINGS

These and/or other embodiments and features of the disclosure will become apparent and more readily appreciated from the following description of certain exemplary embodiments, taken in conjunction with the accompanying drawing of which:
FIG. 1 is a perspective view of a fuel cell stack according to an embodiment of the present disclosure;
FIG. 2 is a perspective view for explaining a baffle installed on the fuel cell stack of FIG. 1;
FIG. 3 is a perspective view of a baffle according to the present disclosure;
FIG. 4A is a first side view of the baffle of FIG. 3;
FIG. 4B is a second side view of the baffle of FIG. 3;
FIGS. 5A to 5C are graphs showing experimental results for performance of a fuel cell stack of the present disclosure; and
FIGS. 6A to 6C are graphs showing experimental results for performance of a fuel cell stack of a comparison example.

### DETAILED DESCRIPTION OF EXEMPLARY EMBODIMENTS

Hereinafter, certain exemplary embodiments according to the present disclosure will be described with reference to the accompanying drawings.

Here, elements that are not essential to the complete understanding of the disclosure are omitted for clarity. Also, like reference numerals refer to like elements throughout.

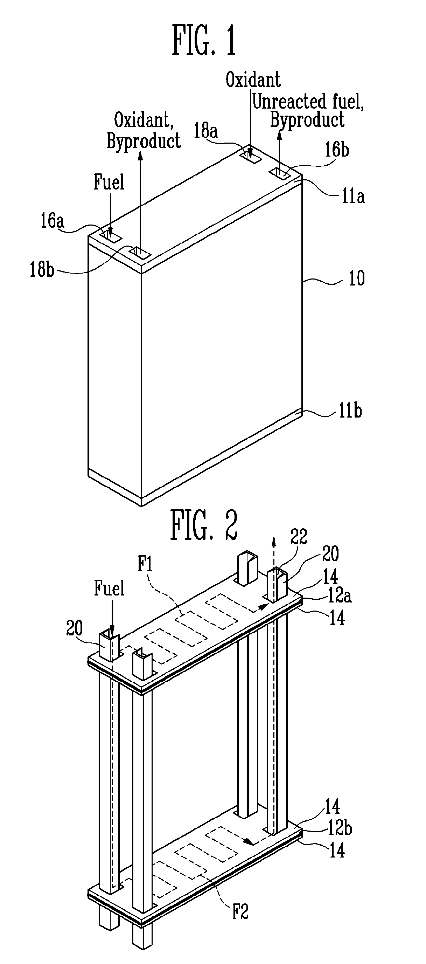

FIG. 1 is a perspective view of a fuel cell stack according to an embodiment of the present disclosure. Referring to FIG. 1, the fuel cell stack of the present disclosure includes a stack body 10 comprising a stack structure of a plurality of cells. The stack body 10 may comprise a pair of end plates 11 a and 11b for forming a uniform clamping pressure.

The cell comprises a plate shaped membrane-electrode assembly, a separator having a fuel flow field for supplying fuel to the membrane-electrode assembly, and a separator having an oxidant flow field for supplying an oxidant to the membrane-electrode assembly. The separators may be formed in a structure where the fuel flow field and the oxidant flow field are provided on both surfaces thereof. The membrane-electrode assembly comprises a polymer electrolyte membrane, an anode catalyst located on one surface of the electrolyte membrane, and a cathode catalyst located on the other surface of the electrolyte membrane. The polymer electrolyte membrane is one example of the electrolyte used in the fuel cell and the present disclosure is not limited thereto. The anode catalyst and the cathode catalyst may be selected from various catalysts used in the fuel cell according to electrolytes. The membrane-electrode assembly may further have a diffusion layer or a support layer for a smooth flow of fuel, oxidants, and reactive byproducts.

The stack body 10 has a U-type stack structure. The U-type stack structure represents a structure where a fuel inlet 16a and a fuel outlet 16b are disposed on the same surface of the stack body 10 as shown in FIG. 1. In the present embodiment, an oxidant inlet 18a and an oxidant outlet 18b are disposed together on the upper surface thereof. However, the oxidant inlet 18a and the oxidant outlet 18b may be disposed on at least any one of the surfaces separately or together.

In the U-type stack body 10, the lengths of the fuel flow paths through each of the cells within the stack body 10 are different for each cell. Therefore, a pressure difference of the fuel supplied to each cell within the stack body 10 may occur. And, the fuel pressure difference for each cell causes a performance difference between the cells, subsequently, making it possible to reduce the overall performance of the fuel cell stack due to the performance deviation of each of the cells. However, the present disclosure is characterized by simply adding a simple-structure component, a baffle, configured to uniformly supply fuel to the each of the cells by simply controlling the fuel pressure difference within the stack body 10.

The reaction formula between the anode and the cathode of the respective cells of the fuel cell stack is as follows. The reaction formula 1 represents a case using an aqueous methanol solution as fuel, and the reaction formula 2 represents a case using a hydrogencontaining gas reforming butane as fuel. In the below reaction formula 1, Eₒ represents theoretical electromotive force.

[Reaction formula 1] Anode: CH₃OH + H₂O → CO₂ + 6H⁺ + 6e⁻

Cathode: 1.5O₂ + 6H⁺ + 6e⁻ → 3H₂O

Overall: 3CH₃OH + 1.5O₂ → CO₂ + 2H₂O, Eₒ = 1.18V

[Reaction formula 2] Reformer: n-C₄H₁₀ + 8H₂O → 4CO₂ + 13H₂

Anode: H₂ → 2H⁺ + 2e⁻
Cathode: 0.5O₂ + 2H⁺ + 2e⁻ → H₂O
Overall: H₂ + 0.5O₂ → H₂O

As shown the reaction formula 1 and the reaction formula 2, the fuel cell stack of the present disclosure may use gas-phase fuel such as hydrogen obtained by reforming fuel such as butane, ethanol, and NaBH₄ liquid fluid, etc. or pure hydrogen gas, in addition to liquid-phase fuel such as aqueous methanol solution. Also, the fuel cell stack of the present disclosure may use air and pure hydrogen, etc. as an oxidant.

FIG. 2 is a perspective view of a baffle disposed in the fuel cell stack of FIG. 1. Referring to FIG. 2, in the U-type fuel cell stack, a cell (hereinafter, referred to as a first cell) located proximal to the fuel inlet and the fuel outlet, and a cell (hereinafter, referred to as a second cell) located distal from the fuel inlet and the fuel outlet have different lengths of fuel flow path. In the present embodiment, the first cell has a membrane-electrode assembly 12a and separators 14 located on the upper and lower surfaces thereof. The second cell has a membrane-electrode assembly 12b and separators 14 located on the upper and lower surfaces thereof. As shown in FIG. 2, when fuel is supplied to the first cell and the second cell through the same fuel manifold, the fuel flow path F1 of the first cell from the fuel inlet to the fuel outlet is shorter than the fuel flow path F2 of the second cell. Therefore, the first cell and the second cell have different fuel pressure.

The fuel manifold comprises a first fuel manifold portion disposed on the fuel inlet side and a second fuel manifold portion disposed on the fuel outlet side. A first baffle 20 is disposed within the first fuel manifold portion and a second baffle 20 is disposed within the second fuel manifold portion. The fuel cell stack may also further comprise a third baffle portion disposed within a third oxidant manifold portion and a fourth baffle portion disposed in a second oxidant manifold portion. The baffle 20 comprise a recess 22 formed on a side of the baffle 20 configured to provide fluid communication with the cells in the stack. The baffle 20 may also comprise a channel embedded or enclosed within the baffle 20 with opening along the side of the baffle 20 configured to provide fluid communication between the recess 22 and the cells in the stack.

In fact, the fuel pressure difference for the respective cells in the U-type fuel cell stack may differ according to at least one of fuel amount, a structure of fuel flow field of a separator, and size of a manifold compared with a stack. Therefore, the below embodiment will assume a case where the second cell is supplied with a predetermined flow of fuel. According to such an assumption, a predetermined flow of fuel is supplied to the manifold having a predetermined cross-section and at this time, although the output voltage of the second cell shows a stable state, the output voltage of the first cell may show an unstable state. However, if using the baffle 20 of the present disclosure, the first cell as well as the second cell may show the output voltage in a stable state.

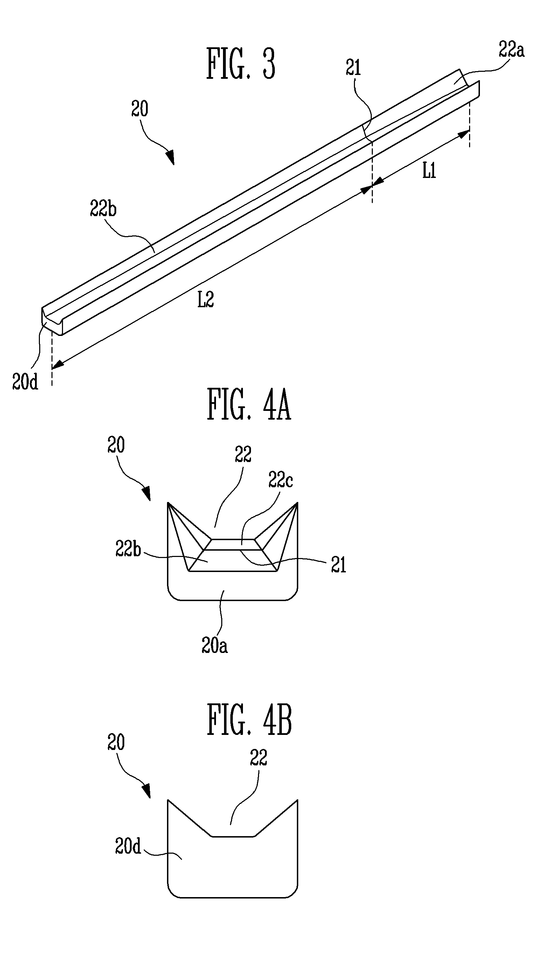

FIG. 3 is a perspective view of a baffle according to the present disclosure. FIG. 4A is a first side view of the baffle of FIG. 3 and FIG. 4B is a second side view of the baffle of FIG. 3. Referring to FIGS. 3, 4A, and 4B, a baffle 20 comprises a first end 20a located on a fuel inlet side of a stack body and a second end 20d facing the other side. The baffle 20 also has a recess 22 formed in a longitudinal direction. The recess 22 functions as a flow passage in fluid communication with the fuel through a fuel inlet to the fuel cells and a flow passage in fluid communication with the fuel cells discharging the unreacted fuel and byproducts from the cells to outside of the stack. The aforementioned recess 22 is divided into a first recess portion 22a located on the one end and a second recess portion 22b located on the other end. Thus, there exists a cross-section transition point 21 of the baffle 22 here located at about the one sixth of the total length of the baffle 20 to divide the baffle 20 into two portions. The cross-sections of the recess in the first recess portion 22a and the second recess portion 22b change differently.

The baffle 20 is disposed within a fuel manifold of the stack body. Herein, the cross-section of the fuel manifold is constant. And, for example, the stack body is assumed to have a structure where thirty cells are stacked. The stack body stacked with thirty cells has a structure where twenty-eight cells are disposed in between a first cell located closest or most proximal to a fuel inlet 16a and a fuel outlet 16b and a thirtieth cell located farthest or most distal from the fuel inlet 16a and the fuel outlet 16b.

In order to supply fuel uniformly to the first cell through the thirtieth cell, the cross-section of the recess 22 of the baffle 20 gradually reduces from a portion adjacent to the first cell to a portion adjacent to the thirtieth cell. In other words, the size of the first recess portion 22a is larger than the size of the second recess portion 22b and every following recess portion. For example, when the recess 22 consists of a first recess portion 22a and a second recess portion 22b, the decrease of the cross-sectional area of the first recess portion 22a may be from 90% to 70% of the fuel manifold cross-sectional area and the decrease of the cross-sectional area of the second recess portion 22b may be from 70% to 50% of the fuel manifold cross-sectional area. Also, a ratio between a length L1 of the first recess portion 22a and a length L2 of the second recess portion is about 1 to 5. In this case, the cross-sectional area of the first recess portion 22a and the cross-sectional area of the second recess portion 22b change differently, i.e. the decrease of the cross-sectional area of the first recess portion 22a is larger than the decrease of the cross-sectional area of the second recess portion 22b. According to the aforementioned structure, the fuel flow pressure is changed between the first cell and the second cell to make a decreased slope of the second recess portion 22b smooth.

The baffle 20 consists of or comprises a material having non-electrical conductivity to avoid electrically conducting with cells and acid resistance to avoid reacting with the fuel. For example, the baffle 20 may be formed of a polymer, in particular of ABS (acrylonitrile-butadiene-styrene), PEFE (polytetrafluoroethylene), and PE (polyethylene).

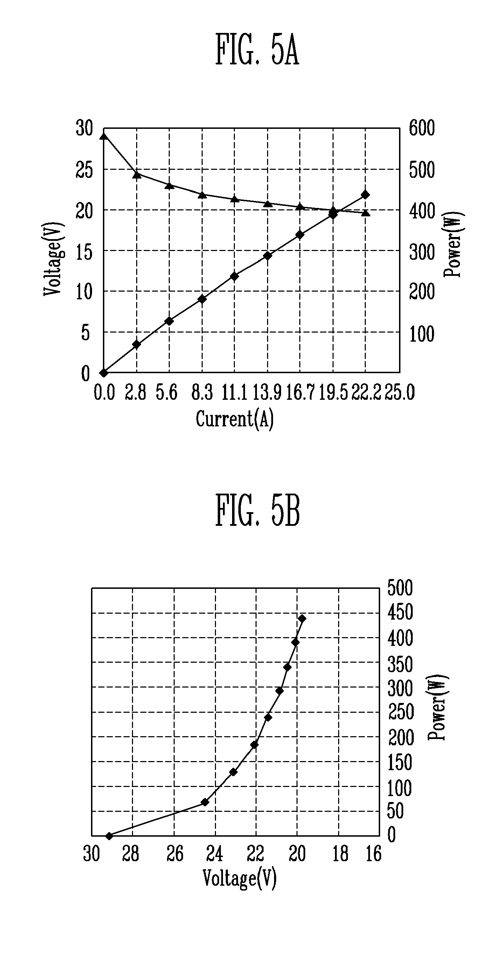

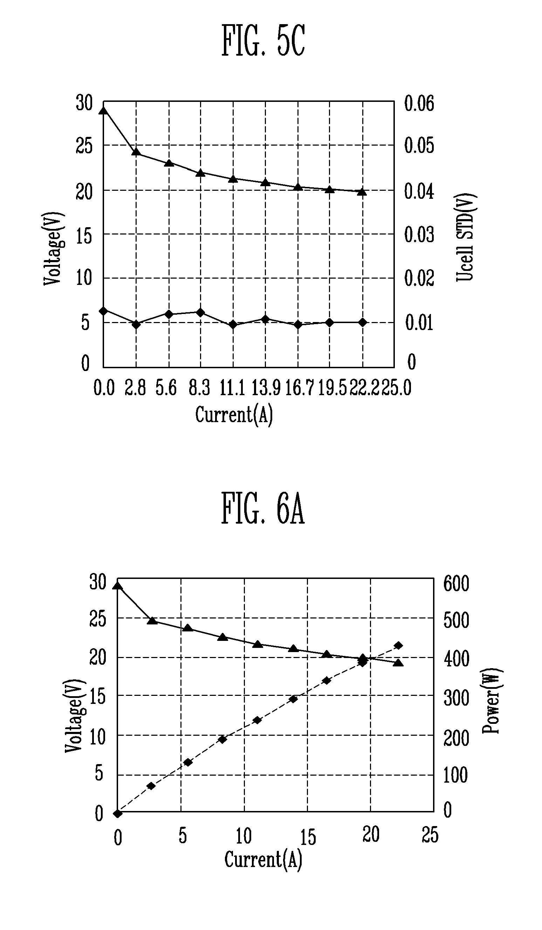

FIGS. 5A to 5C are graphs showing experimental results for performance of a fuel cell stack of the present disclosure. FIGS. 6A to 6C are graphs showing experimental results for performance of a different fuel cell stack in comparison. In the embodiment, the fuel cell stack of the present disclosure comprising the said baffle and the fuel cell stack of the comparison example without the baffle are applied with the same specification and the same load. Each fuel cell stack included thirty fuel cells. In the embodiment according to the present invention, the fuel manifold included a baffle 20 with a recess 22, which was subdivided into a first and second recess portion 22a and 22b, as illustrated in Fig. 3. A length L1 of the first recess portion 22a has been set to a sixth of the total length of the recess 22. Further, the cross-sectional area in the first recess portion 22a was set to decrease from 90% to 70% of the fuel manifold cross-sectional area and the cross-sectional area in the second recess portion 22b was set to decrease from 70% to 50% of the fuel manifold cross-sectional area.

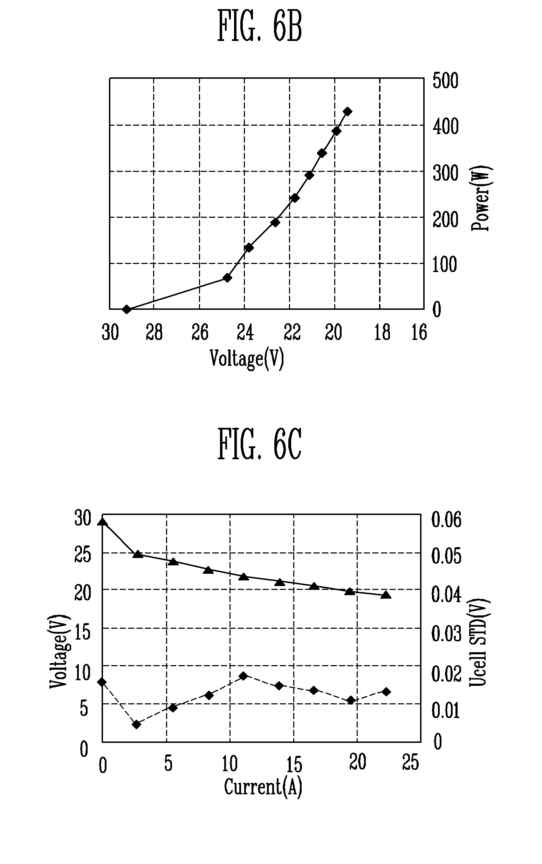

Referring to FIG. 5A, the fuel cell stack of the present disclosure comprising the baffle outputs power of about 390W at current of 19.5V. Meanwhile, the fuel cell stack of the comparison example outputs power of about 383W at output current of 19.5A, as shown in FIG. 6A. Referring to FIG. 5B, the fuel cell stack of the present disclosure outputs power of about 400W at voltage of 20V. Meanwhile, the fuel cell stack of the comparison example outputs power of about 360W at voltage of 20V, as shown in FIG. 6B. Referring to FIG. 5C, although the fuel cell stack of the present disclosure shows a standard STD cell voltage of about 10mV at output current of 19.5A, and it is shown that the standard cell voltage deviation between the cells in the stack configuration is small. Meanwhile, although the fuel cell stack of the comparison example shows a standard cell voltage of about 11mV at voltage of 20V, as shown in FIG. 6C, it is shown that the standard cell voltage deviation between the cells in the stack configuration is larger than that of the fuel cell stack of the present disclosure.

Meanwhile, the aforementioned embodiment explains the structure where the recess of the baffle reduces from the fuel inlet and the fuel outlet to the longitudinal direction of the baffle. Although the aforementioned embodiment is explained centering on the baffle installed within the fuel manifold, it will be obvious that the baffle of the present disclosure can be installed within the oxidant manifold, as shown in FIG. 2. With the present disclosure, the fuel supply and discharge for the cells in the stack can be uniform, without complicating the manufacturing process and assembling process of the fuel cell stack. Also, for the uniform fuel supply and discharge within the stack, there is no need to differently manufacture the size of the manifold size of the separator, making it possible to reduce the manufacturing costs thereof.

## Claims

1. An U-type fuel cell stack comprising:
a stack comprising a plurality of fuel cells disposed in a stack body (10);
a fuel manifold in the stack body (10) fluidly connected to the plurality of fuel cells and configured for supplying fuel to the plurality of fuel cells and disposal of unreacted fuel and byproducts from the plurality of fuel cells; and
an oxidant manifold in the stack body (10) fluidly connected to the plurality of fuel cells and configured for supplying oxidant to the plurality of fuel cells and disposal of unreacted oxidant and byproducts from the plurality of fuel cells;
**characterized in that**
at least one baffle (20) is disposed in the fuel manifold and/or in the oxidant manifold, the baffle (20) comprising a recess (22) extending in a longitudinal direction of the baffle (20) and having a cross-sectional area which decreases in the longitudinal direction.

2. The fuel cell stack as claimed in claim 1, wherein the recess (22) is subdivided into a plurality of recess portions (22a, 22b,...) and each recess portion (22a, 22b,...) has a constant cross-sectional area or constant decrease of the cross-sectional area over its length..

3. The fuel cell stack as claimed in claim 2, wherein the longitudinal recess (22) comprises a first recess portion (22a) proximal to an inlet (16a) of the fuel manifold and a second recess portion (22b) disposed adjacent to the first recess portion (22a), wherein a decrease of the cross-sectional area in the first recess portion (22a) is larger than a decrease of the cross-sectional area in the second recess portion (22b).

4. The fuel cell stack as claimed in claim 3, wherein the cross-sectional area of the first recess portion (22a) decreases from 90% to 70% of an area of the fuel manifold and the cross-sectional area of the second recess portion (22b) decreases from 70% to 50% of an area of fuel manifold.

5. The fuel cell stack as claimed in claim 4, wherein a ratio between a length L1 of the first recess portion (22a) and a length L2 of second recess portion (22b) is about 1:5.

6. The fuel cell stack of any of the preceding claims, wherein the baffle (20) consists of a non-electrically conductive material and acid resistant material.

7. The fuel cell stack as claimed in claim 6, wherein the baffle (20)consists of acrylonitrile-butadiene-styrene (ABS), polytetrafluoroethylene (PEFE) or polyethylene (PE).

8. The fuel cell stack of any of the preceding claims, wherein the fuel manifold comprises:
a first fuel manifold portion configured for supplying fuel;
a second fuel manifold portion configured for discharging unreacted fuel and
byproducts discharged from the cells;
a first baffle disposed in the first fuel manifold portion; and
a second baffle disposed in the second fuel manifold portion.

9. The fuel cell stack of any of the preceding claims, wherein the oxidant manifold comprises:
a first oxidant manifold portion configured for supplying oxidant;
a second oxidant manifold portion configured for discharging unreacted oxidant and byproducts discharged from the cells;
a third baffle disposed in the first oxidant manifold portion; and
a fourth baffle disposed in the second oxidant manifold portion.

10. The fuel cell stack of any of the preceding claims, wherein fuel cell is configured to use fuel comprising any one of gas-phase fuel, liquid-phase fuel, and the combination thereof.

11. The fuel cell stack as claimed in claim 10, wherein the fuel is one of hydrogen gas, methanol, and ethanol.
